# EUROPEAN PATENT APPLICATION

(11) **EP 2 475 072 A1**
(43) Date of publication of application: **11.07.2012**
(21) Application number: 09848887.7
(22) Date of filing: 15.12.2009
(51) Int. Cl.: H02J 17/00

(54) **WIRELESS CHARGING DEVICE**

(30) Priority: 02.09.2009 CN 200910090653
(71) Applicant: aigo Digital Technology Co., Ltd., North 4th Ring Road Haidian Beijing 100080 (CN); Lin, William, San Jose, CA 95131 (US)
(72) Inventor: LIN, William, San Jose, CA 95131 (US)
(74) Representative: Gunzelmann, Rainer
(86) International application number: PCT/CN2009/075582
(87) International publication number: WO 2011/026282

(57) **Abstract**

A wireless charging device (100, 200, 300) is used to be connected with a rechargeable battery or an apparatus with a rechargeable battery. The device includes a main body part (10, 20, 30), a charging circuit part (11, 21, 31) connected with the main body part (10, 20, 30), and a conductive contact part (13, 22, 32) connected with the charging circuit part (11, 21, 31). A coil set (102) connected with the charging circuit part (11, 21, 31) is provided within the main body part (10, 20, 30). The conductive contact part (13, 22, 32) is exposed outside the main body part (10, 20, 30) in order to be connected with the positive and negative poles of the rechargeable battery. The coil set (102) includes an induction coil (103, 107). When the wireless charging device (100, 200, 300) is attached to the rechargeable battery or a portable electronic apparatus and close to or contacted with the transmitting terminal of a charging system, wireless charging is achieved without replacing the present apparatus. It is convenient to use.

## Description

### FIELD OF THE INVENTION

The present invention relates to a charging apparatus, and more particularly to a wireless charging apparatus capable of being attached to a portable device or a rechargeable battery.

### BACKGROUND OF THE INVENTION

At present, portable electronic apparatuses such as Moving Picture Experts Group Audio Layer-3 player (MP3 player), mobile phone and Personal Digital Assistant (PDA) have charging batteries therein, so that users can use the portable electronic apparatuses while moving. In such a portable electronic apparatus, a specific charger for charging the rechargeable battery is separately equipped. The charger is connected to a common power source through a cable and then connected to and charges the rechargeable battery. In order that the charger can provide a charging current to the rechargeable battery of the portable electronic apparatus, the charger should be electrically connected to the rechargeable battery of the portable electronic apparatus. In order to electrically connect the charger and the portable electronic apparatus or the rechargeable battery, corresponding connecting ports should be respectively disposed in the charger and the portable electronic apparatuses. A corresponding conductive terminal is disposed inside the port, to transmit electric energy.

However, the disposition of the conductive terminals inside the charger and the portable electronic apparatus should be in coordination with ports, and dusts and external impurities easily enter the ports, resulting in poor contact between the terminals. Especially, at present, portable electronic apparatuses of different brands and different models are equipped with different chargers. Therefore, each person can have multiple chargers, and especially for home users, a lot of chargers bring great inconvenience to the home. If the user needs to replace the portable electronic apparatus or purchase new portable electronic apparatuses, matched chargers should be purchased, and the original chargers are a waste of resources.

In view of the above problems, at present, a wireless charging manner comes into being, in which the current or electricity is provided to the rechargeable battery of the portable electronic apparatus through inductive coupling. In such a wireless charging manner, a primary coil is added to a wireless charger, and meanwhile, a secondary coil is added to the rechargeable battery. When an alternating current passes through the primary coil, an induction current is generated in the secondary coil adjacent to the primary coil, thereby charging the rechargeable battery. However, it is difficult to popularize such a wireless charging apparatus at present, because the rechargeable battery of the portable electronic apparatus of most users does not have the secondary coil, and thereby the wireless charging manner cannot be adopted. It is a waste of resources if all the existing portable electronic apparatuses are replaced for a wireless charging function, and the user needs to expend extra money.

### SUMMARY OF THE INVENTION

The technical problem to be solved by the present invention is to provide a wireless charging apparatus, which charges a rechargeable battery without changing the structure of the rechargeable battery, therefore saving resources and bringing great convenience to users.

In order to solve the above technical problem, the present invention adopts the following technical solution: a wireless charging apparatus, to be connected to a rechargeable battery or a device disposed with a rechargeable battery, including a main body portion, a charging circuit portion connected to the main body portion, and conductive contact portions connected to the charging circuit portion. The main body portion is disposed with a coil group connected to the charging circuit portion therein. The conductive contact portions are exposed outside the main body portion, and are connected to an anode and a cathode of the rechargeable battery. The coil group includes an induction coil, and the induction coil is a multi-turn stacking coil formed by a metal wire winding along a preset direction, or the induction coil is disposed on a printed circuit board. The conductive contact portions are electrically connected to two ends of the wire.

The wireless charging apparatus is connected to the rechargeable battery. The conductive contact portions are exposed outside the main body portion, and are connected to an anode and a cathode of the rechargeable battery.

The conductive contact portions are located at a side face of the charging apparatus, and after being connected to the anode and cathode of the rechargeable battery, the wireless charging apparatus is located at the side face of the rechargeable battery.

The induction coil is a multi-turn stacking coil formed by a metal wire winding along a present direction, and the conductive contact portions are electrically connected to two ends of the wire.

The main body portion includes plural multilayer printed circuit board. The induction coil is disposed inside the multilayer printed circuit board. Each printed circuit board is winded with multiple coils, and induction coils on two adjacent printed circuit boards are connected.

The induction coil of each printed circuit board is disposed corresponding to the induction coil on the printed circuit board of the adjacent layer in a vertical direction, forming the multi-turn stacking coil.

The multiple induction coils are connected in series, and are winded in the same clockwise or a counter-clockwise direction.

The multilayer printed circuit board is multiple layers of flexible printed circuit boards, and the main body portion is flexible, so that user can fold the main body portion as required.

The main body portion is further disposed with a locating pillar, and the induction coil is formed by the wire winding around the locating pillar along the preset direction.

The coil group further includes a resonance coil. The charging circuit includes a rectification circuit connected to the induction coil, the charging circuit connected to the rectification circuit, a detecting and sampling circuit connected to the charging circuit, and a resonance circuit connected to the detecting and sampling circuit and the resonance coil.

The wireless charging apparatus further includes an operating unit disposed at a side of the main body portion. The conductive contact portions are connected to the operating unit, and the user can move the operating unit to adjust a distance between two conductive contact portions as required.

A side of the main body portion is disposed with an operating portion. The operating unit is disposed on the operating portion, and the operating portion is located between the conductive contact portions and the charging circuit portion.

The operating portion can be connected to the charging circuit portion in a rotary manner, and can rotate to a horizontal state or a vertical state.

The operating portion includes a first buckling wall connected to the charging circuit portion, a connection wall extending upward from the first buckling wall, and a second buckling wall extending from the connection wall to a position where the main body portion is located.

The pair of conductive contact portions extend from an end of the second buckling wall, and the connection wall can move up and down, to adjust a vertical distance between the first and second buckling walls.

The wireless charging apparatus further includes a shell. The main body portion of the wireless charging apparatus is in coordination of the shell. Different specifications of the shell are set, so that the shell is fixed with electronic apparatuses of different models.

An external side of the main body portion is in coordination with the shell in a dismountable manner.

The wireless charging apparatus of the present invention has the following advantages.

In use, the user can adhere the main body of the wireless charging apparatus to the rechargeable battery or directly fix the charging apparatus with the portable electronic device through the shell of the wireless charging apparatus, to replace the shell of the existing electronic device directly. For example, an existing mobile phone shell can be replaced by the wireless charging apparatus with the shell of the present invention, and the conductive contact portions are connected to an anode and a cathode of a mobile phone rechargeable battery through adjusting the distance between the two conductive contact portions. In this way, the rechargeable battery can be charged by an induction current generated in the induction coil of the charging apparatus without replacing the rechargeable battery of the mobile phone. The shell of the wireless charging apparatus can be set to different shapes according to different electronic devices such as mobile phones. The user does not need to specific wireless rechargeable batteries, and only needs to attach the charging apparatus of the present invention to the rechargeable battery and connect the charging apparatus to the rechargeable battery. In addition, the charging apparatus is applicable to rechargeable batteries of different specifications, and the user only needs one wireless charger to charge different rechargeable batteries by using the charging apparatus of the present invention, thereby saving resources and bringing usage convenience. In the wireless charging apparatus of the present invention, the printed circuit board can be set to flexible and laminar printed circuit board as required, that is, the main body portion can be set to be flexible, and the user can fold the main body portion freely. Therefore, the wireless charging apparatus is portable and saves space.

### BRIEF DESCRIPTION OF THE DRAWING

FIG. 1 is a top view of a first embodiment of a wireless charging apparatus according to the present invention;
FIG. 2 is a schematic view of a coil group and multi-layer printed circuit board in a main body portion according to the present invention;
FIG. 3 is a second disposition manner of a coil group according to the present invention;
FIG. 4 is a third disposition manner of a coil group according to the present invention;
FIG. 5 is a circuit block diagram of a charging apparatus according to the present invention;
FIG. 6 is a schematic view of a second embodiment of a wireless charging apparatus according to the present invention;
FIG. 7 is a schematic view of a third embodiment of a wireless charging apparatus according to the present invention; and
FIG. 8 is a schematic view of a fourth embodiment of a wireless charging apparatus according to the present invention.

### DETAILED DESCRIPTION OF THE EMBODIMENTS

In order to further illustrate the technical means adopted by the present invention to achieve the intended objectives and the efficacies, the specific implementation manners, structural features and efficacies of the wireless charging apparatus of the present invention are described below with reference to the accompanying drawings and embodiments, and the detailed descriptions are as follows.

A wireless charging apparatus of the present invention is connected to a rechargeable battery of a portable electronic apparatus with a rechargeable battery. After a wireless charger preset with a primary coil therein is electrified and generate a magnetic field, the wireless charging apparatus of the present invention connected to the rechargeable battery is made to contact or be close to the wireless charger, so that the wireless charging apparatus of the present invention generates an induction current to charge the rechargeable battery.

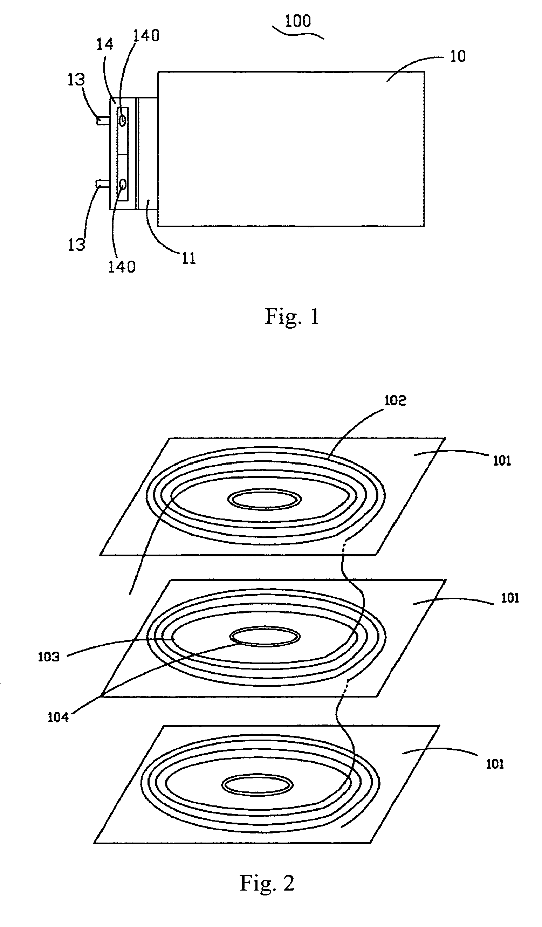

FIG. 1 is a top view of a first embodiment of a wireless charging apparatus according to the present invention. A wireless charging apparatus 100 in this embodiment includes a main body portion 10, a charging circuit portion 11 connected to the main body portion 10, a pair of conductive contact portions 13 connected to the charging circuit portion 11, and an operating portion 14 located between the conductive contact portions 13 and the charging circuit portion 11, in which the conductive contact portions 13 extend from a side of the operating portion 14. In this embodiment, the charging circuit portion 11 connects the operating portion 14 and the main body portion 10. In specific implementation, the charging circuit portion can be located at another side of the main body portion, or be disposed inside the main body portion, and the operating portion 14 can be disposed at any side of the main body portion.

FIG. 2 is a schematic view of a coil group in the main body portion. The main body portion 10 includes plural multilayer printed circuit boards 101. Each printed circuit board 101 is at least disposed with at least one coil group 102. The coil group 102 includes an induction coil 103 and a resonance coil 104. Two tail ends of the induction coil 103 are respectively connected to the conductive contact portions 13, and connected to an anode and a cathode of the rechargeable battery through the conductive contact portions 13, forming a closed loop circuit, used for generating an induction current through induction with the magnetic field generated by the primary coil in the wireless charger (not shown), thereby charging the rechargeable battery. A magnetic field generated by the resonance coil 104 can be resonant with the magnetic field generated by the primary coil, so that the induction coil 103 has a maximum electromotive force in the resonant magnetic field. In this embodiment, the coil group 102 can be disposed in the following manners: metal films of copper or aluminum with desirable conductivity are stacked on each layer of substrate of the multilayer printed circuit board 101, or stacked on a winding film made of polyimide and etched into a pattern shown in FIG. 2. With other conditions remain unchanged, the magnitude of induced electromotive force is in proportion to the number of turns of the induction coil 103. Therefore, in the present invention, each layer of substrate of the multilayer printed circuit board 101 is disposed with at least one coil group 102, and in the vertical direction, the coil groups 102 are interconnected, to form a stacking three-dimensional coil. In a horizontal direction, each coil group can be winded for multiple times as required. Therefore, the number of turns in the vertical direction and horizontal direction is increased at the same time, which effectively improves the induced electromotive force and further reduces time for wireless charging.

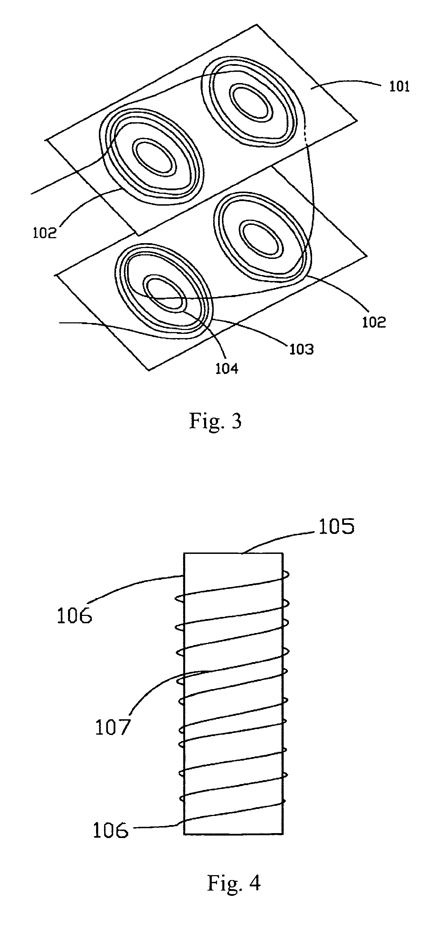

FIG. 3 shows another disposition manner of the coil group according to the present invention. Two or more interconnected coil groups 102 are disposed on each printed circuit board 101. Winding directions of the induction coils 103 of the coil groups 102 are the same. The induction coils 103 on printed circuit boards of adjacent layers have the same winding direction, are interconnected and disposed corresponding to each other in the vertical direction.

FIG. 4 shows a third disposition manner of the coil group according to the present invention. The induction coil 107 is disposed in the following manner: a wire 106 is winded around a locating pillar 105 in a certain direction, to form a stacking three-dimensional coil in the vertical direction. Definitely, in order to increase the number of turns, the wire 106 can be winded on the locating column 105 for multiple layers, and two ends of the wire are respectively connected to an anode and a cathode of the rechargeable battery. The resonance coil can be formed by winding another wire on the locating pillar.

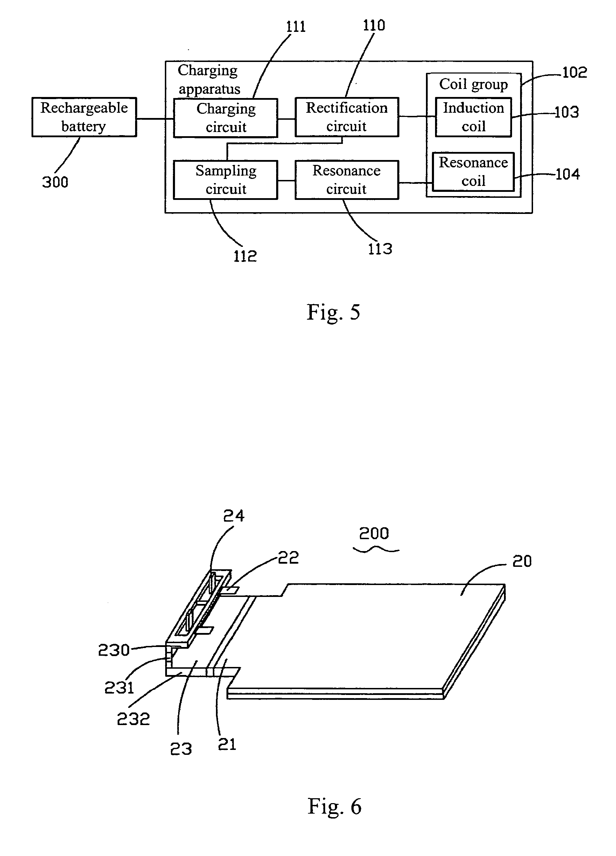

FIG. 5 shows a circuit block diagram of a charging apparatus according to the present invention, which includes a rectification circuit 110 connected to the induction coil 103, a charging circuit 111 connected to the charging circuit 111, a detecting and sampling circuit 112 connected to the rectification circuit 110, and a resonance circuit 113 connected to detecting and sampling circuit 112 and the resonance coil 104. After an alternating current is conducted through the primary coil in the wireless charger, an alternating magnetic field is generated and projected to the air. When the rechargeable battery connected to the charging apparatus of the present invention enters the effective coverage of the alternating magnetic field, the induction coil 103 of the coil group 102 generates a current after induction with the alternating magnetic field, and sends the current to the rectification circuit 110 for rectification. The current output by the rectification circuit 110 is respectively sent to an input end of the charging circuit 111 and an input end of the detecting and sampling circuit 112. The charging circuit 111 is electrically connected to the rechargeable battery 300 and charges the rechargeable battery with micro-current. The detecting and sampling circuit 112 detects and samples the current sent by the rectification circuit 110 and controls the resonance circuit 113 to perform oscillation. The resonance circuit 113 outputs the current to drive the oscillation coil 104 to generate an alternating magnetic field through oscillation, and the alternating magnetic field is resonant with the alternating magnetic field generated by the primary coil in the charger in a certain distance and coverage. According to the resonance principle, the induced electromotive force of the induction coil of the coil group 102 in the charging apparatus is increased in the resonant magnetic field. The induction current is directly sent to the charging circuit after being rectified by the rectification circuit, to charge the rechargeable battery with large current.

After the rechargeable battery leaves the coverage of electromagnetic waves generated by the primary coil, the induction coil 103 in the coil group cannot the induct the corresponding electromagnetic waves. The induction coil 103 does not send current to the rectification circuit 110 for rectification. The rectification circuit 110 does not output current. The detecting and sampling circuit 112 does not receive the current sent by the rectification circuit. The detecting and sampling circuit 112 controls the resonance circuit 104 to stop oscillation. The resonance circuit 104 does not output current to drive the oscillation coil, and therefore the oscillation coil 104 fails to generate the alternating magnetic field.

FIG. 6 shows a schematic view of a second embodiment of a wireless charging apparatus according to the present invention. A manner for disposing coil groups inside the wireless charging apparatus 200 of this embodiment can adopt any one of the above three coil group disposition manners. The wireless charging apparatus 200 includes a main body portion 20, a charging circuit portion 21 connected to the main body portion 20, and a pair of conductive contact portions 22 connected to the charging circuit portion 21, in which the pair of conductive contact portions 22 extend from an operating portion 23. The operating portion23 includes a first buckling wall232 connected to the charging circuit portion21, a connection wall231 extending upward from the first buckling wall232, and a second buckling wall extending230 from the connection wall231 to a position where the main body portion20 is located. The pair of the conductive contact portions22 extended from one side of the second buckling wall 230. The second buckling wall 230 includes a pair of operating units24 connecting with the conductive contact portions22. The connection wall231 can move up and down, to adjust a vertical distance between the first buckling wall232 and the second buckling wall 230 to clamp the rechargeable battery in different thickness. At the same time, the distance between the pair of the conductive contact portions22 which contact with the anode and cathode contact points of the rechargeable battery in different specification, can be controlled by the customized motion of the pair of operating units24.

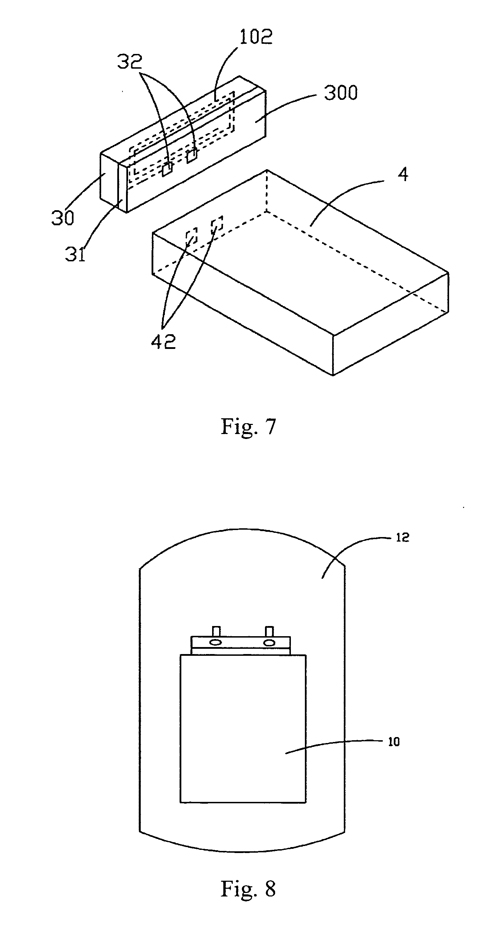

FIG. 7 is a schematic view of a third embodiment of a wireless charging apparatus according to the present invention. In this embodiment, the disposition of the coil group in the wireless charging apparatus could be one of the foregoing disposition. The different between the third embodiment and the foregoing embodiment is the wireless charging apparatus100, 200 in the foregoing embodiments are disposed on the head or back of the rechargeable battery to be charged, and the wireless charging apparatus300 is installed on the side face of the rechargeable battery to be charged in the third embodiment. The wireless charging apparatus300 includes a main body portion30 having a coil group102 inside, a charging circuit portion31 connected with the coil group102 inside the main body portion30, and a conductive contact portion32 disposed on the one side of the rechargeable battery300 to be charged which could connected with the charging circuit portion31 and the anode and cathode42 of the rechargeable battery to be charged.

In the first and second embodiment, the charging circuit portion can be disposed on the main body directly, the operating unit can be disposed on one side face of the main body portion and turn to horizontal state and vertical state to match the anode and cathode of the rechargeable battery in different specification. Also the distance between the conductive contact portions is adjustable to match the anode and cathode of the rechargeable battery in different specification. In the third embodiment, some adhesive material can be coated on the surface of the main body portion, and the main body portion can be attached on the rechargeable battery or portable electric apparatus to facilitate the charging process. For utilized the wireless charging apparatus by electric apparatus with different specification and profile, a shell12 is installed outside the main body portion of the wireless charging apparatus. As illustrated in Fig8, the shell12 has different specification and easy to disassemble, in order to replace the back shell of the current portable electric apparatus(e.g. cell phone), and then, the wireless charging apparatus can connect with the portable electric apparatus by the means of the connection between the portable electric apparatus and the shell12.

In use, the user can adhere the main body of the charging apparatus to the rechargeable battery. The conductive contact portions are connected to an anode and a cathode of a mobile phone rechargeable battery through adjusting the distance between the two conductive contact portions. The rechargeable battery can be charged by an induction current generated in the induction coil of the charging apparatus. The user does not need to purchase specific wireless rechargeable batteries, and only needs to attach the charging apparatus of the present invention to the rechargeable battery and connect the charging apparatus to the rechargeable battery. In addition, the charging apparatus is applicable to rechargeable batteries of different specifications, and the user only needs one wireless charger to charge different rechargeable batteries by using the charging apparatus of the present invention, thereby saving resources and bringing usage convenience. In the wireless charging apparatus of the present invention, the printed circuit board can be set to flexible and laminar printed circuit board as required, that is, the main body portion can be set to be flexible, and the user can fold the main body portion freely. Therefore, the wireless charging apparatus is portable and saves space.

Above description only the indicative embodiment of the present invention, but not use to limit the protect scope of the present invention. Any equivalent change, modification and integration done by any technical staff of this field under the principles and concept of the present invention should fall in the protect scope of the present invention.

## Claims

1. A wireless charging apparatus, including a main body portion, a charging circuit portion connected to the main body portion, and a pair of conductive contact portions connected to the charging circuit portion, **characterized in that**: the main body portion being disposed with a coil group connected to the charging circuit portion therein, the coil group including an induction coil which electrically connected with the conductive contact portion.

2. A wireless charging apparatus according to claim 1, wherein the wireless charging apparatus is connected to a rechargeable battery, the conductive contact portions are exposed outside the main body portion and are connected to an anode and a cathode of a rechargeable battery.

3. A wireless charging apparatus according to claim 2, wherein the conductive contact portions are located at a side face of the charging apparatus, and after being connected to the anode and cathode of the rechargeable battery, the wireless charging apparatus is located at the side face of the rechargeable battery.

4. A wireless charging apparatus according to claim 1, wherein the induction coil is a multi-turn stacking coil formed by a metal wire winding along a present direction, and the conductive contact portions are electrically connected to two ends of the wire.

5. A wireless charging apparatus according to claim 1, wherein the main body portion includes plural multilayer printed circuit boards, the induction coil is disposed inside the multilayer printed circuit board, each circuit board is winded with multiple coils, and induction coils on two adjacent printed circuit boards are connected.

6. A wireless charging apparatus according to claim 5, wherein the induction coil of each printed circuit board is disposed corresponding to the induction coil on the printed circuit board of the adjacent layer in a vertical direction, forming the multi-turn stacking coil.

7. A wireless charging apparatus according to claim 6, wherein the multiple induction coils are connected in series, and are winded in the same clockwise or a counter-clockwise direction.

8. A wireless charging apparatus according to claim 5, wherein the multilayer printed circuit board is multiple layers of flexible printed circuit boards, and the main body portion is flexible, so that user can fold the main body portion as required.

9. A wireless charging apparatus according to claim 1, wherein the main body portion is further disposed with a locating pillar, and the induction coil is formed by the wire winding around the locating pillar along the preset direction.

10. A wireless charging apparatus according to claim 1, wherein the coil group further includes a resonance coil, the charging circuit includes a rectification circuit connected to the induction coil, the charging circuit connected to the rectification circuit, a detecting and sampling circuit connected to the charging circuit, and a resonance circuit connected to the detecting and sampling circuit and the resonance coil.

11. A wireless charging apparatus according to claim 1, wherein the wireless charging apparatus further includes an operating unit disposed at a side of the main body portion, the conductive contact portions are connected to the operating unit, and the user can move the operating unit to adjust a distance between two conductive contact portions as required.

12. A wireless charging apparatus according to claim 11, wherein a side of the main body portion is disposed with an operating portion, the operating unit is disposed on the operating portion, and the operating portion is located between the conductive contact portions and the charging circuit portion.

13. A wireless charging apparatus according to claim 12, wherein the operating portion can be connected to the charging circuit portion in a rotary manner, and can rotate to a horizontal state or a vertical state.

14. A wireless charging apparatus according to claim 12, wherein the operating portion includes a first buckling wall connected to the charging circuit portion, a connection wall extending upward from the first buckling wall, and a second buckling wall extending from the connection wall to a position where the main body portion is located.

15. A wireless charging apparatus according to claim 14, wherein the pair of conductive contact portions extend from an end of the second buckling wall, and the connection wall can move up and down, to adjust a vertical distance between the first and second buckling walls.

16. A wireless charging apparatus according to claim 1, wherein the wireless charging apparatus further includes a shell, the main body portion of the wireless charging apparatus is in coordination of the shell, different specifications of the shell are set, so that the shell is fixed with electronic apparatuses of different models.

17. A wireless charging apparatus according to claim 14, wherein an external side of the main body portion is in coordination with the shell in a dismountable manner.
